(19) Europäisches Patentamt
European Patent Office
Office européen des brevets

(11) Veröffentlichungsnummer: **0 260 587 B1**

(12) **EUROPÄISCHE PATENTSCHRIFT**

(45) Veröffentlichungstag der Patentschrift: **07.07.93**

(51) Int. Cl.[5]: **C08L 27/12**, B01D 67/00

(21) Anmeldenummer: **87113157.9**

(22) Anmeldetag: **09.09.87**

Die Akte enthält technische Angaben, die nach dem Eingang der Anmeldung eingereicht wurden und die nicht in dieser Patentschrift enthalten sind.

# (54) Lösungen von Fluorpolymeren und deren Verwendung.

(30) Priorität: **17.09.86 DE 3631561**

(43) Veröffentlichungstag der Anmeldung:
**23.03.88 Patentblatt 88/12**

(45) Bekanntmachung des Hinweises auf die Patenterteilung:
**07.07.93 Patentblatt 93/27**

(84) Benannte Vertragsstaaten:
**BE DE FR GB IT NL**

(56) Entgegenhaltungen:
**WO-A-81/01158**
**DE-C- 851 853**
**US-A- 4 414 280**
**US-A- 4 610 762**

(73) Patentinhaber: **HOECHST AKTIENGESELL-SCHAFT**
**Postfach 80 03 20**
**W-6230 Frankfurt am Main 80(DE)**

(72) Erfinder: **Blickle, Peter, Dr.**
**Hattersheimer Str. 14**
**W-6233 Kelkheim(DE)**
Erfinder: **Hintzer, Klaus, Dr.**
**Rupertusstr. 3**
**W-8269 Burgkirchen(DE)**
Erfinder: **Löhr, Gernot, Dr.**
**Schneibsteinstr. 6**
**W-8269 Burgkirchen(DE)**
Erfinder: **Schwertfeger, Werner, Dr.**
**Erlenstr. 8**
**W-6306 Langgöns(DE)**

EP 0 260 587 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, daß sich Fluorpolymere mit funktionellen Gruppen, wie Carbonester- oder Sulfonsäuregruppen, in Perfluorkerosin, "Halocarbonölen" (perhalogenierte Alkylpolymere mit niedrigem Molekulargewicht, z.B. von Chlortrifluorethylen, Hersteller: Halocarbon Products Corp., Hackensack N.J., USA) oder Perfluorethern lösen (vgl. WO-81/01158). Derartige Lösungsmittel besitzen jedoch recht hohe Siedepunkte von mehr als 200 °C, was beim Abdampfen eine hohe thermische Belastung des Polymeren bedingt. Außerdem lösen sich eine Reihe von Fluorpolymeren mit Estergruppen, beispielsweise die in der EP-A-0 088 285 und der EP-A-0 171 696 beschriebenen, nur schlecht in Halocarbonölen.

In der DE-OS 3.036.410 werden weiterhin Perfluorether mit Carbonester oder Sulfonylfluorid-Gruppen als Lösungsmittel für Fluorpolymere beschrieben, die Sulforylfluorid- oder Carbonestergruppen enthalten. Nachteile dieser Lösungsmittel sind, daß ihre reaktiven Gruppen nicht säure- und basenstabil sind, Umesterungen auftreten können, sowie Korrosionserscheinungen an Apparaten z.B. durch Auftreten von Fluorwasserstoff (Hydrolyse von $SO_2F$-Gruppen u.a.) zu befürchten sind.

Der Einsatz von Perfluoralkyl- und Chlorperfluoralkyl-Verbindungen als Dispergiermittel für perfluorierte Polymere ist bekannt (US-A 4,610,762). Bei der Herstellung dieser Dispersionen wird ein kleiner Anteil der Polymere gelöst. Eine völlige Lösung findet jedoch nicht statt.

Die Aufgabe vorliegender Erfindung bestand daher darin, ein Lösungsmittel für Fluorpolymere bzw. entsprechende Lösungen bereitzustellen, welche obige Nachteile nicht besitzen und Fluorpolymere, wie sie z.B. in der EP-A-0 088 285 beschrieben sind, die entweder unpolare oder polare Gruppen enthalten, gleichermaßen gut lösen.

Die Erfindung betrifft eine Lösung eines Fluorpolymeren in einem halogenhaltigen Lösungsmittel, dadurch gekennzeichnet, daß das Lösungsmittel die allgemeine Formel (I)

$$R_f\text{-CFX-}(CF_2)_n\left[\text{-}CF_2\text{-O-}\overset{CF_3}{\overset{|}{C}}F\text{-}\right]_m R_f' \qquad (I)$$

besitzt, in der unabhängig voneinander sein können

- $R_f$ F oder Perfluoralkyl mit 1 - 3 C-Atomen,
- X Wasserstoff oder F, Cl, Br, vorzugsweise Wasserstoff, F, Cl und Br,
- n eine ganze Zahl von 0 - 10, vorzugsweise von 0 - 6, insbesondere 1 - 5,
- m eine Zahl von 0 - 5, vorzugsweise 0 - 3, insbesondere 0 - 2 und
- $R_f'$

$$R_f' \quad \text{-}CF_2\text{-O-CFY-}CF_2Y, \quad \text{-CFY-}\underset{CF_3}{\underset{|}{C}}F_2Y, \quad \text{-}CF_2Y$$

$$R_f''\text{-CFX'-}(CF_2)_{n'}\text{-}[CF_2\text{-O-CF-}]_m \ ,$$

worin $R_f''$, $n'$ und $m'$ die gleiche Bedeutung haben wie $R_f'$, n und m, $X'$ für Wasserstoff, Cl, Br oder J, vorzugsweise Wasserstoff, Cl oder Br und Y für Wasserstoff, Cl oder Br, vorzugsweise Cl oder Br steht,

mit der Maßgabe, daß der Siedepunkt dieses Lösungsmittels bei Normaldruck höchstens 190 °C beträgt, falls nicht mindestens einer der Reste X, $X'$ oder Y für Wasserstoff steht und mit der weiteren Maßgabe, daß m im Falle von $R_f'$ gleich $\text{-CFY-}CF_2Y$ oder $\text{-}CF_2Y$ nur 0 bedeutet und daß Verbindungen der Formel

X"$CF_2$-CY'Z-X"'

in der

- X" die Halogene F, Cl, Br und J und
- X"' die Halogene Cl, Br und J darstellen,
- Y' und Z unabhängig voneinander Wasserstoff, F, Cl, Br, J und R' sind, wobei
- R' Perfluoralkyl- oder Chlorfluoralkylreste mit 1 bis 6 C-Atomen darstellt,

nicht umfaßt werden.

Weiterhin betrifft die Erfindung die Verwendung einer derartigen Lösung zur Herstellung oder Reparatur von Membranen, die insbesondere für Flüssigkeitsdurchdringungsprozesse eingesetzt werden.

Der Siedepunkt der erfindungsgemäß eingesetzten Lösungsmittel beträgt vorzugsweise höchstens 180 °C und liegt insbesondere zwischen 50 °C und 180 °C, wobei sich beide Angaben auf Normaldruck beziehen.

Als Beispiele für Lösungsmittel der obigen Formel (I) seien hier genannt:

$H-(CF_2)_3-O-CFBr-CF_2Br$, 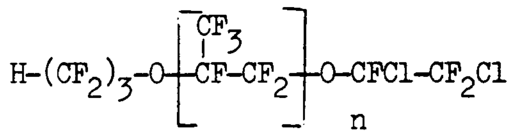 (n=0,1),

$H-(CF_2)_5-O-CFCl-CF_2Cl$, 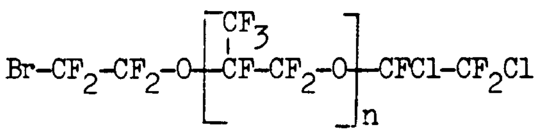 (n=0,1),

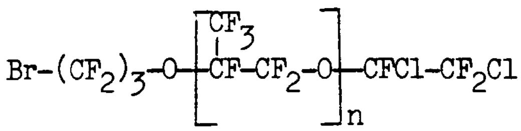 (n=0,1), $H-CF_2-CF_2-CFCl-CF_2Cl$,

$CF_3-CF_2-CF_2-O-CF-CF_2-O-CFBr-CF_2Br$,

$H-CF_2-CF_2-O-CFBr-CF_2Br$, $H-(CF_2)_5-O-CFBr-CF_2Br$,

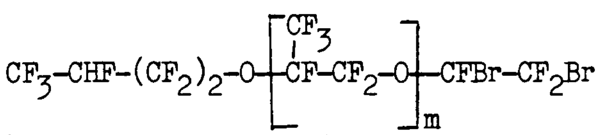 (m=0,1,2),

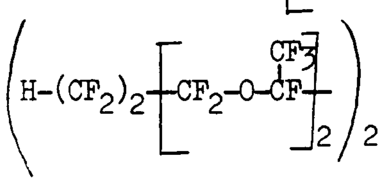 • X

Bevorzugte Vertreter sind:

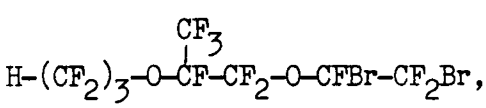

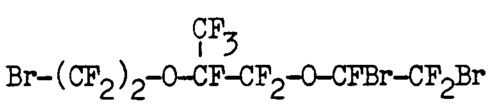 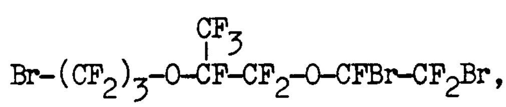

$H-CF_2-CF_2-CFBr-CF_2Br$, $H-(CF_2)_8-H$, $(CF_3-CHF-CF_2)_2$,

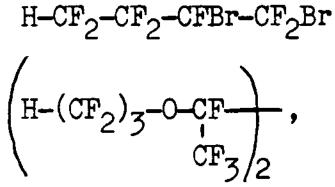

$H-(CF_2)_5-Cl$, $H(CF_2)_4Br$.

Selbstverständlich liegt es auch im Rahmen der Erfindung, Gemische von Lösungsmitteln gemäß Formel (I) einzusetzen.

Die Herstellung dieser Lösungsmittel erfolgt analog bekannten Syntheseverfahren. Lösungsmittel der allgemeinen Formel (I), in denen $R_f'$ für $CF_2$-O-CFY-$CF_2$Y oder CFY-$CF_2$Y steht, können beispielsweise erhalten werden durch Addition von Chlor oder Brom an ungesättigte Verbindungen der allgemeinen Formel (II)

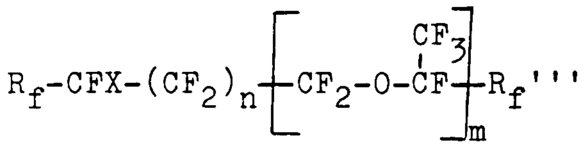
(II),

in der $R_f$, X, n und m die obengenannten Bedeutungen haben und $R_f'''$ -$CF_2$-O-CF = $CF_2$ oder -CF = $CF_2$ ist.

Die Vinylether dieser allgemeinen Formel II ($R_f'''$ = -$CF_2$-O-CF = $CF_2$) sind z.B. durch die nachstehende Reaktionsfolge leicht herstellbar:

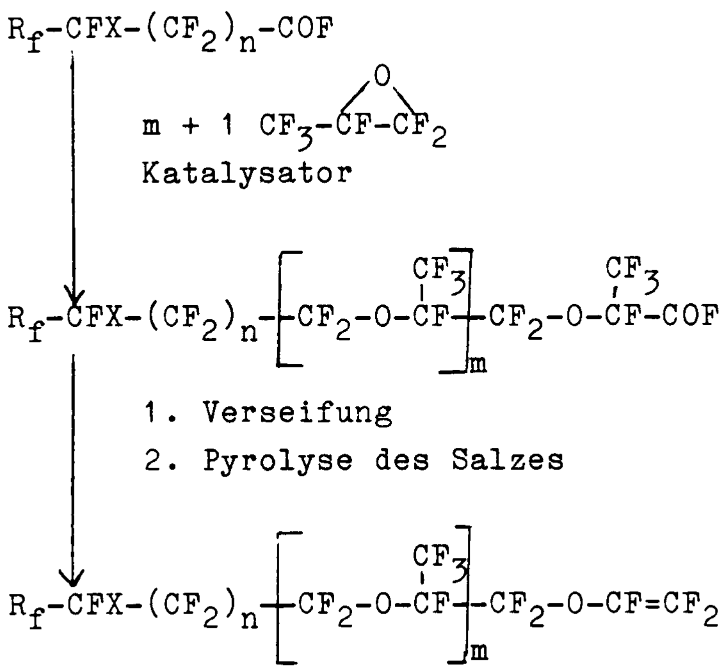

(III)

(IV)

(V)

Bezüglich näherer Einzelheiten sei auf Angew. Chem. 97, 164 (1985) sowie auf R.E. Banks, Preparation, Properties, and Ind. Appl. of Organofluorine Compounds Ellis Horwood Ltd. 1982, Seite 257 sowie auf die gleichzeitig eingereichte DE-Patentanmeldung P 36 31 560.5 verwiesen.

Olefine der allgemeinen Formel II ($R_f'''$ = -CF = $CF_2$) mit m gleich 0, sind z.B. durch Pyrolyse von Na-Salzen erhältlich:

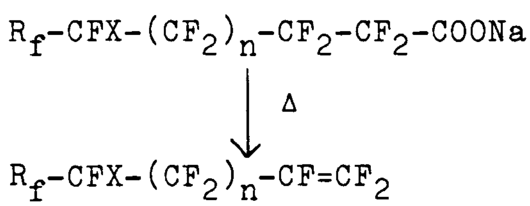

(VI)

(VII)

Siehe hierzu z.B. "Aliphatic Fluorine Compounds", (Lovelace, Rausch, Postelnek, Reinhold Publ. Corp.), 1958, Seite 107 und J. of. Fluorine Chemistry 13 (1979), S. 531 ff.

Lösungsmittel der allgemeinen Formel (I) in der $R_f$ = F, X = H, n = 1, 3, 5, 7 usw., m = 0 und $R_f'$ = $CF_2$Y sind, werden hergestellt

für Y = Cl durch Pyrolyse von Difluorchlormethan, wobei sie als Nebenprodukte anfallen (Ind. Eng. Chem. 39, 354 (1947);

für Y = Cl oder Br durch Belichtung von entsprechenden fluorierten Carbonsäurehalogeniden (J. Org. Chem.

30 2182 (1965));
für Y = Wasserstoff durch Hydrierung von entsprechenden fluorierten Olefinen, vgl. z.B. "Organic Fluorine Chemistry" (M. Hudlicky; Plenum Press), 1971, S. 89 ff.

Durch Kolbe-Elektrolyse können Verbindungen den allgemeinen Formel (I) mit

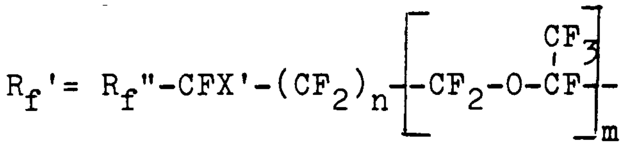
,

erhalten werden. Beim Einsatz von zwei verschiedenen Carbonsäuren können dabei auch Kolbe-Produkte hergestellt werden, die nicht symmetrisch aufgebaut sind:

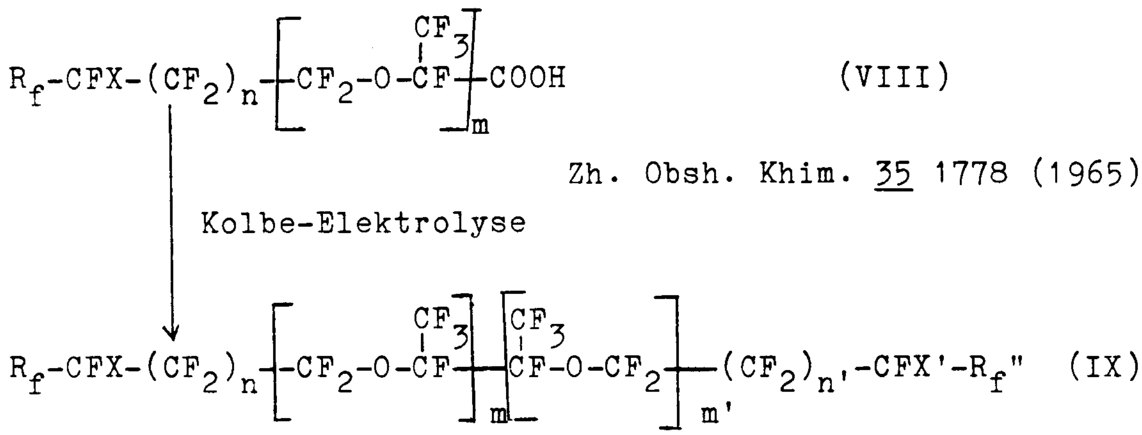


(VIII)

(IX)

Bei den Fluorpolymeren der erfindungsgemäßen Lösungen handelt es sich um bekannte Produkte, wie sie beispielsweise in der DE-OS 2 905 457 und der DE-OS 3 036 410, in der E-A-0 066 369 und der EP-A-0 088 285 sowie in der WO-81/01158 beschrieben sind.

Bevorzugt enthalten sie die Gruppen

$-SO_2F$ (A)

und/oder

-CG (G = Stickstoff, -OOR oder $-ON(R)_2$, wobei R $C_1$-$C_{10}$-Alkyl, Aryl, Aralkyl, vorzugsweise $C_1$-$C_8$-Alkyl darstellt) (B)

wobei die Gruppen (B) bevorzugt sind. Vorzugsweise bedeutet die Gruppe (B) -COOR.

Besonders bevorzugt sind erfindungsgemäß Fluorpolymere, welche die wiederkehrenden Einheiten mit der allgemeinen Formel (C) entweder allein oder zusammen mit anderen wiederkehrenden Einheiten enthalten:

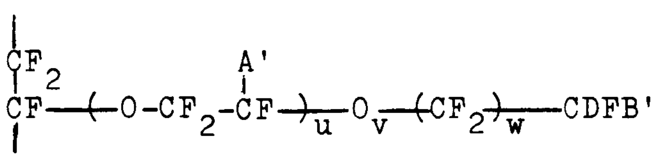

(C)

worin

| | |
|---|---|
| u = | 0, 1 oder 2, vorzugsweise 0 oder 1, |
| v = | 0 oder 1, vorzugsweise 1, |
| w = | 1 - 7, vorzugsweise 2 - 5, |
| A′ und B′ = | unabhängig voneinander F oder $CF_3$, vorzugweise A′ = $CF_3$ und B′ = F und |
| D = | Wasserstoff, Cl, Br, CG (G die gleiche Bedeutung wie oben) und weniger bevorzugt |

$SO_2F$ bedeuten.

Diese wiederkehrenden Einheiten (C) können ggf. in Mischung untereinander das Fluorpolymere aufbauen. Vorzugsweise finden sich in diesem jedoch zusätzlich noch wiederkehrende Einheiten der allgemeinen Formel (D)

$-CF_2-CFE-$ (D)

worin E für Cl, F, $R_f$ oder $OR_f$ ($R_f$ = $CF_3$ oder ggf. durch O-Atome unterbrochnener $C_2$-$C_8$-Perfluoralkylrest) steht. Bevorzugt bedeutet E = F, $CF_3$, $-O-CF_2-CF_2-CF_3$ oder

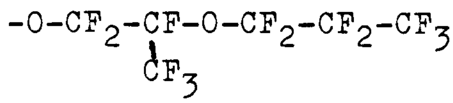

und insbesondere F.

Auch hier können diese wiederkehrenden Einheiten ggf. in Mischung vorliegen. Bevorzugt im Rahmen dieser Fluorpolymeren sind solche, welche aus der wiederkehrenden Einheit (C)

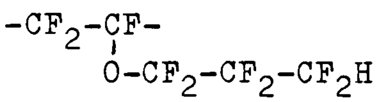

oder

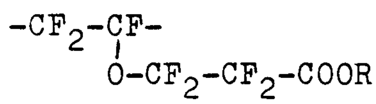

und aus der wiederkehrenden Einheit (D) $-CF_2-CF_2-$ im Falle von Bipolymeren bzw. $-CF_2-CF_2-$ und -CF-CFE- (E = obige Bedeutung mit Ausnahme von F) im Falle von Terpolymeren bestehen. Der Gehalt an (C) beträgt im Falle von Bi- bzw. Terpolymeren 10 bis 50 Mol-%, vorzugsweise 13 bis 45 Mol-%, bezogen auf das Gesamtpolymere.

Beispiele für zu den wiederkehrenden Einheiten (C) führender Monomerer sind:

$CF_2=CFOCF_2CF_2SO_2F$,

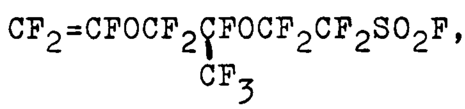

$CF_2{=}CFOCF_2\underset{\displaystyle CF_3}{\underset{|}{C}}FOCF_2\underset{\displaystyle CF_3}{\underset{|}{C}}FOCF_2CF_2SO_2F$, $CF_2{=}\ CFCF_2CF_2SO_2F$,

$CF_2{=}CFO(CF_2)_{1-6}COOCH_3$, $CF_2{=}CF(CF_2)_{0-8}COOCH_3$

$CF_2{=}CF{-}[O{-}CF_2{-}\underset{\displaystyle CF_3}{\underset{|}{C}}F]_{0-2}{-}O{-}(CF_2){-}_{1-6}CF_2H$,

$CF_2{=}CFOCF_2CF(CF_3)OCF_2CF_2COOCH_3$,

$CF_2{=}CF{-}O{-}CF_2CF(CF_3)O(CF_2)_3COOCH_3$,

$CF_2{=}CF{-}O{-}CF_2CF(CF_3)OCF_2COOCH_3$

Im Zusammenhang mit der wiederkehrenden Einheit (D) sind als Beispiele Tetrafluorethylen, Trifluorchlorethylen, Hexafluorpropen, Perfluor(propylvinylether) und Perfluorpropoxy(propylvinylether) zu nennen.

Die Herstellung derartiger aus (C) und ggf. (D) bestehender, erfindungsgemäß besonders bevorzugter Fluorpolymerer ist beispielsweise in der EP-A-0 088 285 und der EP-A-0 171 696 beschrieben.

Das Molekulargewicht (Zahlenmittel) der erfindungsgemäßen Fluorpolymeren liegt im allgemeinen zwischen 50000 und 1000000, vorzugsweise zwischen 100000 und 500000. Das Äquivalentgewicht (bei Vorhandensein der Gruppen (A) und/oder (B)) beträgt 400 bis 1800, vorzugsweise 450 bis 1500.

Die Herstellung der erfindungsgemäßen Lösungen der Fluorpolymere kann bei Temperaturen von 20 °C bis zum Siedepunkt des entsprechenden Lösungsmittels, vorzugsweise bei Temperaturen von 50 °C bis 10 °C unterhalb des Siedepunktes erfolgen. Gegebenenfalls kann dabei auch unter überatmosphärischem Druck gearbeitet werden, um höhere Temperaturen zu erzielen. Im allgemeinen ist jedoch Normaldruck bevorzugt. Es ist von Vorteil, den Lösevorgang durch Rühren udgl. der Lösug zu unterstützen und das Fluorpolymere in möglichst feinverteilter Form einzusetzen. Die Konzentration (der Feststoffgehalt) der erfindungsgemäßen Lösungen liegt üblicherweise zwischen 0,5 und 30 Gew.-%, vorzugsweise zwischen 1 und 25 Gew.-%.

Die erfindungsgemäßen Lösungen zeichnen sich vor allem durch ihre Stabilität aufgrund des Fehlens von funktionellen Gruppen im Lösungsmittel, der Fähigkeit des Lösungsmittels, Polymere mit oder ohne polare Gruppen gleichermaßen gut zu lösen, ihrem hohen Feststoffgehalt wegen der guten Löse-Eigenschaften der Lösungsmittel und des Umstandes aus, daß daraus Formkörper (Membranen) ohne größere thermische Belastung des Fluorpolymeren hergestellt werden können.

Die erfindungsgemäßen Lösungen können auf den verschiedensten Gebieten eingesetzt werden, wie sie beispielsweise in der DE-OS 2.905.467 und der DE-OS 3.036.410 sowie der EP-A-0 066 369 beschrieben sind. Bevorzugt werden sie zur Herstellung oder Reparatur von Membranen insbesondere für Flüssigkeitsdurchdringungsprozesse benutzt, wie sie bei der Ultra- bzw. Hyperfiltration, Dialyse (umgekehrte Osmose) Elektrolyse, insbesondere von wäßrigen Kochsalzlösungen, sowie in Brennstoffzellen auftreten. Als weitere Einsatzgebiete kommen Membranen für Ionenaustauschprozesse, für Massentransporte sowie für katalytische Zwecke in Betracht.

Zur Herstellung dieser Membranen wird die Lösung gegossen oder ein poröses Substrat, wie Netze, Gewebe, poröse Platten etc. wird mit der Lösung imprägniert. Anschließend erfolgt dann Umwandlung der Gruppen (A) und/oder (B) in die Säure oder Salzform in bekannter Weise, falls erforderlich.

Die erfindungsgemäßen Lösungen können in wirksamer Weise auch zur Reparatur von Membrandefekten, wie Nadellöchern, dienen. Gegebenenfalls reicht dazu auch schon das erfindungsgemäße Lösungsmittel selbst aus, nachdem die evtl. vorhandenen funktionellen Gruppen in ein zur Lösung geeignetes Derivat umgewandelt wurden.

Weiterhin können die erfindungsgemäßen Lösungen auch dazu verwendet werden, um nichtbenetzbare Oberflächen benetzbar zu machen (im Falle des Vorhandenseins von Gruppen (A) und/oder (B) ggf. nach

deren Hydrolyse) oder um das Fluorpolymere, nach Zusatz von Nichtlösungsmitteln zur Lösung, in feinverteilter Form zu erhalten.

Beispiele

I. Herstellung der Lösungsmittel

1. $R_f' = CF_2$-O-CFBr(Cl)-$CF_2$Br(Cl) oder CFBr(Cl)-$CF_2$Br(Cl).

a) In einem Glaskolben, der mit einem Magnetrührer, Rückflußkühler und Tropftrichter ausgestattet war, wurden der Vinylether oder das Olefin vorgelegt. Unter Belichtung mit einer Tageslichtlampe tropfte man so lange Brom zu, bis keine Entfärbung mehr auftrat. Die Innentemperatur wurde durch Kühlung mit Eis zwischen 20 und 100 °C gehalten. Die Aufarbeitung des Ansatzes erfolgte entweder durch Waschen mit Natronlauge und Wasser und anschließende Trocknung über $P_2O_5$ mit nachfolgender Destillation oder durch direkte Destillation des Reaktionsgemisches.

b) In der vorstehend beschriebenen Apparatur, in der der Rückflußkühler durch einen Kältekühler und der Tropftrichter durch ein Gaseinleitungsrohr ersetzt war, wurde die Chlorierung von Vinylethern und Olefinen vorgenommen. Es wurde so lange Chlor bei 0 - 40 °C eingeleitet, bis eine bleibende gelbe Färbung auftritt. Die Aufarbeitung erfolgte wie bei der Bromierung beschrieben.

In der nachfolgenden Tabelle ist eine Reihe von "Dibromiden" und "Dichloriden" zusammengestellt, die auf diesem Weg erhalten wurden:

| "Dibromide" | Kp.: °C/mbar | Dichte bei 23°C [g/cm³] | Ausbeute % |
|---|---|---|---|
| 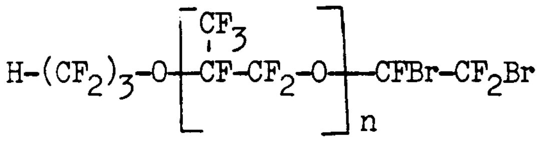 | | | |
| n=0 | 58-59°/80 | 2.02 | 92 |
| n=1 | 83-84°/40 | 1.98 | 83 |
| $H-CF_2-CF_2-O-CFBr-CF_2-Br$ | 57°/133 | 2.07 | 83 |
| $H-(CF_2)_5-O-CFBr-CF_2Br$ | 68°/27 | 2.015 | 92 |
| 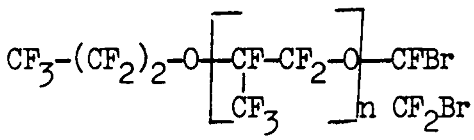 | | | |
| n=0 | 109/1013 | 1.95 | 88 |
| n=1 | 160/1013 | 1.97 | 85 |
| 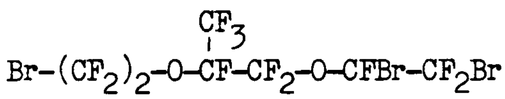 | 77-80°/28 | | 80 |
| 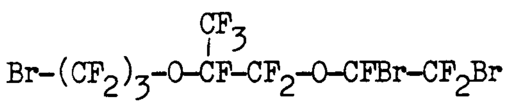 | 114°/67 | | 79 |
| 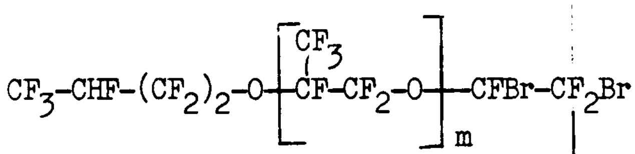 | | | |
| m=0 | 66-67°/64 | | 82 |
| m=1 | 101°/67 | | 77 |
| m=2 | 83-84°/6.7 | | 80 |

| "Dichloride" | Kp.: °C/mbar | Dichte bei 23°C [g/cm³] | Ausbeute % |
|---|---|---|---|
| $H-CF_2-CF_2-CFBr-CF_2Br$ | 119°/997 | 2.17 | 83 |
| $H-(CF_2)_3-O-CFCl-CF_2Cl$ | 99-100°/1013 | | 82 |
| $H-(CF_2)_5-O-CFCl-CF_2Cl$ | 142-143°/1013 | | 75 |
| $Br-CF_2-CF_2-O-CFCl-CF_2Cl$ | 107°/994 | | 81 |
| $Br-(CF_2)_3-O-CF(CF_3)-CF_2-O-CFCl-CF_2Cl$ | 74-75°/27 | | 78 |
| $H-CF_2-CF_2-CFCl-CF_2-Cl$ | 84°/997 | | 93 |

2. $R_f' = R_f''-CFX'-(CF_2')_{n'}-\left[-CF_2-O-\underset{}{CF}(CF_3)-\right]_{m'}$ (Kolbe-Elektrolyse)

Die fluorieren Kohlenwasserstoffe und Ether 1,8-Dihydrohexadekafluoroctan (2), 2,5-Dihydrododekafluorhexan (4) und 1,10-Dihydro-5,6-bistrifluormethyl-4,7-oxatetradekafluordekan (6) sowie das Hexadecan (8) wurden aus den entsprechenden Carbonsäuren (1), (3), (5) und (7) durch Kolbe-Elektrolyse hergestellt:

$$H-(CF_2)_4-COOH \ (1) \longrightarrow H-(CF_2)_8-H \ (2)$$

$$CF_3-CHF-CF_2-COOH \ (3) \longrightarrow (CF_3-CHF-CF_2)_2 \ (4)$$

$$H-(CF_2)_3-O-CF(CF_3)-COOH \ (5) \longrightarrow \left(H-(CF_2)_3-O-CF(CF_3)-\right)_2 \ (6)$$

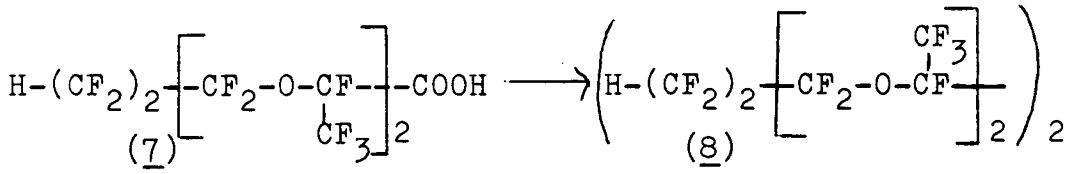

(7) (8)

In einer Glastopfelelektrolysezelle mit Platinnetzelektroden (Anode 59 $cm^2$) wurden in einem Elektrolyt, der aus 330 ml $H_2O$, 165 ml $CH_3OH$ und 2,5 g NaOH bestand, 200 g (0,8 Mol) $H-(CF_2)_4-COOH$ bei 14 bis 8 A Stromstärke elektrolysiert (5 F/Mol). Danach wurde der Elektrolyt mit 500 ml 1 N NaOH versetzt und die Produktphase abgetrennt; diese wurde mit Wasser gewaschen, über $Na_2SO_4$ getrocknet und destilliert. Ausbeute an (2) 82,7 %; Sdp. 134 °C (Lit.: A.I. Levin, O.N. Chechina, S.V. Sokolov Zh. Obsh. Khim. 35 [10] 1778 - 81 (1965).

Die Verbindungen (4), (6) und (8) wurden auf analoge Weise in derselben Apparatur mit den nachfolgenden Ausbeuten hergestellt:
(4) in 72 % Ausbeute (Kp. 80 - 82 °C)
(6) in 67 % Ausbeute (Kp. 103 - 104 °C/233 mbar)
(8) in 80 % Ausbeute (Kp. 110 °C/26 mbar).

Beispiel 1

10 g eines Fluorpolymeren aus Tetrafluorethylen (TFE) und ω-Hydroperfluor-(propylvinylether) (HPPVE), das gemäß Beispiel 1 der EP-A-0 171 696 hergestellt worden war und 21,5 Mol-% HPPVE enthielt, wurden in 90 g des Lösungsmittels mit der Formel

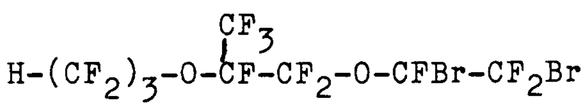

(Kp. 83 - 84 °C/40 mbar) bei 140 °C 3 Stunden lang gerührt. Es entstand eine völlig klare Lösung, woraus sich z.B. schöne klare Folien herstellen ließen.

Beispiel 2

Das Fluorpolymere gemäß Beispiel 1 wurde nach dem in Beispiel 1 der EP-0 088 285 beschriebenen Verfahren in die Methylesterform überführt. 10 g eines solchen Fluorpolymeren wurden danach 5 Stunden bei 150 °C in 80 g des in Beispiel 1 verwendeten Lösungsmittels gerührt. Man erhielt eine völlig klare Lösung mit einem Feststoffgehalt von 11,1 Gew.-%. Aus einer solchen Lösung wurden Filme hergestellt, die nach der Hydrolyse mit NaOH z.B. als Ionenaustauschermembranen bei der Chloralkali-Elektrolyse Verwendung finden. Wurde eine solche Membran in eine Elektrolyse-Zelle, die mit einer Titan-Streckmetallanode und einer V4A-Kathode ersehen war, eingebaut, so erhielt man bei einer Stromdichte von 3000 $A/m^2$ einer Anolytkonzentration von 205 g $NaCl/lH_2O$ und einer Laugenkonzentration von 36 % NaOH eine Stromausbeute von 94 % und eine Zellspannung von 3,45 V.

Beispiel 3

Zu 5 g des Copolymeren aus Beispiel 2 wurden 60 g des Lösungsmittels der Formel $H-(CF_2)_8-H$ (Kp. 134 °C) gegeben. Es wurde 2 Stunden bei 95 °C gerührt und eine klare Lösung des Polymeren erhalten. Gegossene Filme zeigten bei der Chloralkali-Elektrolyse dieselben elektrochemischen Werte wie in vorstehendem Beispiel 2.

Beispiel 4

5 g eines Terpolymeren aus TFE/PPVE/HPPVE (76/8/16 Mol-%), das entsprechend dem Verfahren im Beispiel 1 der EP-A-0 088 285 in die Methylesterform überführt worden war (Äquivalentgewicht 912), wurde mit 30 ml des Lösungsmittels gemäß Beispiel 3 versetzt. Nach 2 Stunden Rühren bei 110 °C erhielt man eine klare Lösung. (PPVE = $CF_3-CF_2-CF_2-O-CF=CF_2$).

Beispiel 5

Zu 5 g des Copolymeren aus Beispiel 2 wurden 50 g des Lösungsmittels der Formel

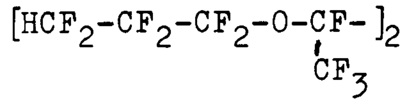

(Kp.: 150 °C) gegeben. Es wurde 2 Stunden bei 100 °C gerührt und eine klare Lösung des Polymeren erhalten.

Beispiel 6 (Vergleich)

Zu 5 g des Copolymeren aus Beispiel 2 wurden 150 g des Lösungsmittels der Formel

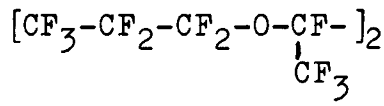

(Kp.: 134 °C) gegeben. Es wurde 7 Stunden bei 120 °C gerührt; das Polymere war lediglich stark gequollen, aber nicht gelöst.

Beispiel 7 (Vergleich)

Zu 5 g des Copolymeren aus Beispiel 2 wurden 100 g Halocarbonöl 11-21 (Hersteller: Halocarbon Products Corp., Hackensack N.J. USA) gegeben. Das Polymere löste sich unter den in Beispiel 5 angegebenen Bedingungen nicht; es ließ sich erst bei Temperaturen von über 165 °C nach mehrstündigem Rühren in Lösung bringen.

Beispiel 8

Zu 5 g des Copolymeren aus Beispiel 5 wurden 90 g des Lösungsmittels $H(-CF_2)_4-CF_2Cl$ (Kp.: 77 °C) gegeben. Es wurde 3 Stunden bei 68 °C gerührt und eine klare Lösung des Polymeren erhalten. Aus dieser Lösung ließen sich Filme/Folien herstellen, die nach der Hydrolyse mit 25 % NaOH z.B. als Ionenaustauschermembranen bei der Chloralkali-Elektrolyse Verwendung finden können.

Beispiel 9

Zu 5 g des Copolymeren aus Beispiel 5 wurden 80 g des Lösungsmittels $HCF_2-CF_2-CFBr-CF_2Br$ (Kp.: 119 °C) gegeben. Das Polymere löste sich unter Rühren nach 2 Stunden bei 90 °C unter Bildung einer klaren Lösung.

Beispiel 10

Zu 10 g des Terpolymeren aus Beispiel 4 wurden 50 g des Lösungsmittels gemäß Beispiel 1 gegeben. Es wurde 5 Stunden bei 15 °C gerührt und eine klare Lösung des Polymeren erhalten.

## Patentansprüche

**1.** Lösung eines Fluorpolymeren in einem halogenhaltigen Lösungsmittel, dadurch gekennzeichnet, daß das Lösungsmittel die allgemeine Formel (I)

$$R_f-CFX-(CF_2)_n-\left[CF_2-O-\underset{}{\overset{CF_3}{\overset{|}{C}}}F\right]_m-R_f' \qquad (I)$$

besitzt, in der

- $R_f$ F oder Perfluoralkyl mit 1 - 3 C-Atomen,
- X Wasserstoff, F, Cl, Br, J,
- n eine ganze Zahl von 0 - 10,
- m eine Zahl von 0 - 5 und
- $R_f'$ gleich $-CF_2-O-CFY-CF_2Y$, $-CFY-CF_2Y$, $-CF_2Y$ oder

$$R_f''-CFX'-(CF_2)_{n'}-\left[CF_2-O-\overset{CF_3}{\overset{|}{C}}F\right]_{m'}- \qquad \text{darstellen,}$$

worin $R_f''$, n' und m' die gleiche Bedeutung haben wie $R_f$, n und m, X' Wasserstoff, Cl, Br oder J und

- Y Wasserstoff, Cl oder Br darstellt,

mit der Maßgabe,

- daß der Siedepunkt dieses Lösungsmittels bei Normaldruck höchstens 190 °C beträgt, falls nicht mindestens einer der Reste X, X' oder Y für Wasserstoff steht,
- daß m im Falle von $R_f'$ gleich $-CFY-CF_2Y$ oder $-CF_2Y$ nur 0 bedeutet und
- daß Verbindungen der Formel

  $X''CF_2-CY'Z-X'''$

  in der

  - X'' die Halogene F, Cl, Br und J und
  - X''' die Halogene Cl, Br und J darstellen,
  - Y' und Z unabhängig voneinander Wasserstoff, F, Cl, Br, J und R' sind, wobei
  - R' Perfluoralkyl- oder Chlorfluoralkylreste mit 1 bis 6 C-Atomen darstellt,

  nicht umfaßt werden.

2. Lösung nach Anspruch 1, dadurch gekennzeichnet, daß X in der Formel (I) Wasserstoff, F, Cl oder Br bedeutet.

3. Lösung nach Anspruch 1 und/oder 2, dadurch gekennzeichnet, daß n für eine ganze Zahl von 0 bis 6 und m für eine ganze Zahl von 0 bis 3 steht.

4. Lösung nach mindestens einem der Ansprüche 1 bis 3, dadurch gekennzeichnet, daß $R_f'$ die Bedeutung von

$$-CF_2-O-CFBr-CF_2Br \text{ oder } R_f''-CFH-(CF_2)_{n'}-\left[CF_2-O-\overset{CF_3}{\overset{|}{C}}F\right]_{m'} \text{ hat.}$$

**5.** Lösung nach mindestens einem der Ansprüche 1 bis 4, dadurch gekennzeichnet, daß der Siedepunkt des Lösungsmittels bei höchstens 180 ° C liegt.

**6.** Lösung nach mindestens einem der Ansprüche 1 bis 5, dadurch gekennzeichnet, daß der Feststoffgehalt an Fluorpolymeren 0,5 bis 30 Gew.-% beträgt.

**7.** Lösung nach mindestens einem der Ansprüche 1 bis 6, dadurch gekennzeichnet, daß das Fluorpolymere mindestens die wiederkehrenden Einheiten (C)

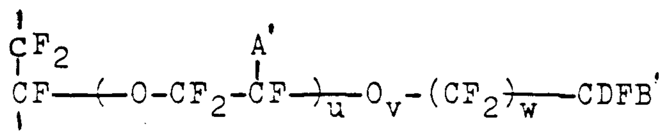 (C)

enthält, worin u = 0, 1 oder 2, v = 0 oder 1, w = 1 bis 7, A′ und B′ = unabhängig voneinander F oder $CF_3$ und D = Waserstoff, Cl, Br, -COOR mit R = $C_1$-$C_{10}$-Alkyl bedeuten.

**8.** Lösung nach Anspruch 7, dadurch gekennzeichnet, daß u mindestens gleich 0 und/oder v gleich 1 ist und daß der Gehalt an Einheiten (C) 10 bis 50 Mol-% beträgt.

**9.** Lösung nach mindestens einem der Ansprüche 1 bis 8, dadurch gekennzeichnet, daß das Fluorpolymere noch wiederkehrende Einheiten (D)

$-CF_2-CFE$ (D)

enthält, wobei E steht für Cl, F, $R_f$ oder $OR_f$ und $R_f$ den $CF_3$-Rest oder einen gegebenenfalls durch O-Atome unterbrochenen $C_2$-$C_8$-Perfluoralkylrest bedeutet.

**10.** Lösung nach mindestens einem der Ansprüche 1 bis 9, dadurch gekennzeichnet, daß das Fluorpolymer Gruppen der allgemeinen Formel (A) und/oder (B)

$-SO_2F$ (A)
-CG (B)

enthält, wobei G für OOR mit R gleich $C_1$-$C_{10}$-Alkyl steht.

**11.** Verwendung der Lösung nach mindestens einem der Ansprüche 1 bis 10 zur Herstellung von Membranen, insbesondere zur Herstellung oder Reparatur von Membranen für Flüssigkeitsdurchdringungsprozesse oder Ionenaustauschprozesse.

**12.** Verwendung nach Anspruch 11, dadurch gekennzeichnet, daß der Flüssigkeitsdurchdringungsprozeß eine Elektrolyse, insbesondere eine Elektrolyse von wäßriger Kochsalzlösung, ist.

**13.** Verwendung nach Anspruch 11 oder 12, dadurch gekennzeichnet, daß der Flüssigkeitsdurchdringungsprozeß eine Hyper- oder Ultrafiltration ist.

**14.** Verwendung der Lösung nach Anspruch 10, um nichtbenetzbare Oberflächen benetzbar zu machen.

**15.** Verwendung der Lösung nach mindestens einem der Ansprüche 1 bis 10 zur Herstellung von Überzügen auf inerten Trägermaterialien.

## Claims

1. A solution of a fluoropolymer in a halogen-containing solvent, wherein the solvent has the formula (I)

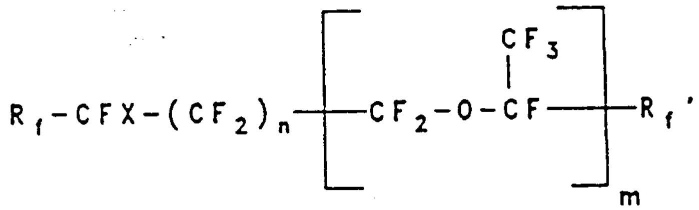

(I)

in which

$R_f$ denotes F or perfluoroalkyl having 1 - 3 carbon atoms,
X denotes hydrogen, F, Cl, Br or I,
n denotes an integer from 0 - 10,
m denotes a number from 0 - 5, and
$R_f'$ equals $-CF_2-O-CFY-CF_2Y$, $-CFY-CF_2Y$ or $-CF_2Y$, or denotes

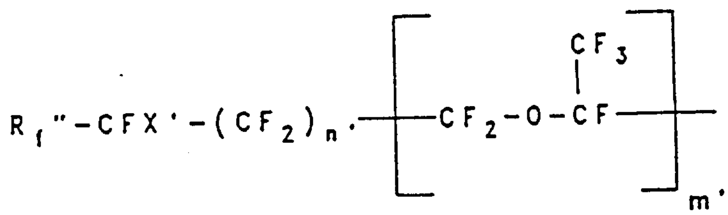

in which $R_f''$, n' and m' have the same meaning as $R_f$, n and m, X' denotes hydrogen, Cl, Br or I, and Y denotes hydrogen, Cl or Br,

with the proviso

- that the boiling point of this solvent at atmospheric pressure is at most 190 °C if at least one of the radicals X, X' or Y does not represent hydrogen,
- that m, where $R_f'$ equals $-CFY-CF_2Y$ or $-CF_2Y$, is only 0, and
- that compounds of the formula

  $X''CF_2-CY'Z-X'''$

  in which

  X'' is the halogens F, Cl, Br and I and
  X''' is the halogens Cl, Br and I,
  Y' and Z, independently of one another, are hydrogen, F, Cl, Br, I and R', where
  R' is perfluoroalkyl or chlorofluoroalkyl radicals having 1 to 6 carbon atoms,

  are not included.

2. A solution as claimed in claim 1, wherein X in the formula (I) denotes hydrogen, F, Cl or Br.

3. A solution as claimed in claim 1 and/or 2, wherein n represents an integer from 0 to 6 and m represents an integer from 0 to 3.

4. A solution as claimed in at least one of claims 1 to 3, wherein $R_f'$ has the meaning of

$-CF_2-O-CFBr-CF_2Br$ or 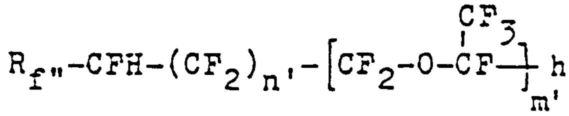 hat.

5. A solution as claimed in at least one of claims 1 to 4, wherein the boiling point of the solvent is at most 180 °C.

6. A solution s claimed in at least one of claims 1 to 5, wherein the solids content of the fluoropolymer is 0.5 to 30% by weight.

7. A solution as claimed in at lest one of claims 1 to 6, wherein the fluoropolymer contains at least the repeating units (C)

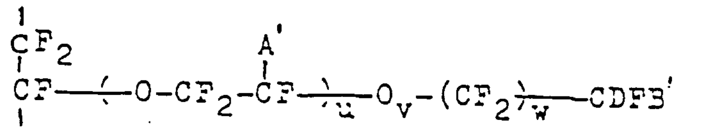 (C)

in which u denotes 0, 1 or 2, v denotes 0 or 1, w denotes 1 to 7, A' and B', independently of one another, denote F or $CF_3$ and D denotes hydrogen, Cl, Br or -COOR where R denotes $C_1$-$C_{10}$-alkyl.

8. A solution as claimed in claim 7, wherein u is at least equal to 0 and/or v is equal to 1 and wherein the content of units (C) is 10 to 50 mol-%.

9. A solution as claimed in at least one of claims 1 to 8, wherein the fluoropolymer also contains repeating units (D)

$-CF_2$-CFE (D)

where E represents Cl, F, $R_f$ or $OR_f$, and $R_f$ denotes the $CF_3$ radical or a $C_2$-$C_8$-perfluoroalkyl radical which is optionally interrupted by oxygen atoms.

10. A solution as claimed in at least one of claims 1 to 9, wherein the fluoropolymer contains groups of the formula (A) and/or (B)

$-SO_2F$ (A)
-CG (B)

where G represents OOR where R equals $C_1$-$C_{10}$-alkyl.

11. The use of a solution as claimed in at least one of claims 1 to 10 for the production of membranes, in particular for the production or repair of membranes for liquid permeation processes or ion exchange processes.

12. The use as claimed in claim 11, wherein the liquid permeation process is electrolysis, in particular electrolysis of aqueous sodium chloride solution.

13. The use as claimed in claim 11 or 12, wherein the liquid permeation process is hyper- or ultrafiltration.

14. Use of a solution as claimed in claim 10 for rendering non-wettable surfaces wettable.

15. The use of a solution as claimed in at least one of claims 1 to 10 for the production of coatings on inert base materials.

**Revendications**

1. Solution d'un polymère fluoré dans un solvant halogéné, solution caractérisée en ce que le solvant est un composé de formule générale I ci-dessous :

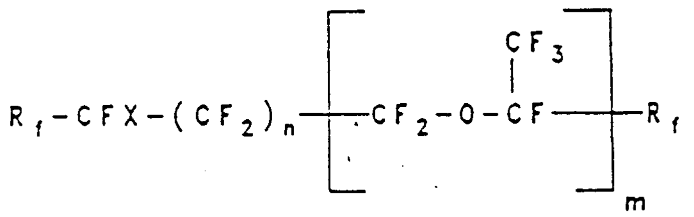

(I)

dans laquelle

- $R_f$ est le fluor ou un perfluoralkyle en $C_{1-3}$,
- X l'hydrogène ou bien F, Cl, Br ou I,
- n un entier de 0 à 10,
- m un entier de 0 à 5, et
- $R_f'$ un groupe $-CF_2-O-CFY-CF_2Y$, $-CFY-CF_2Y$, $-CF_2Y$ ou

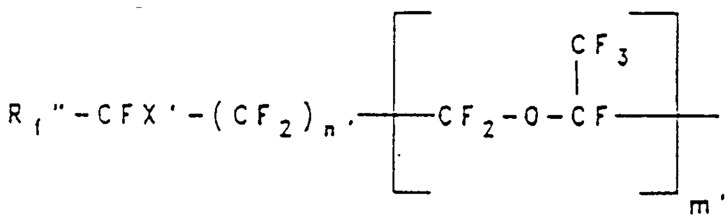

$R_f''$, n' et m' ayant les mêmes significations que $R_f'$, n et m, X' désignant l'hydrogène, Cl, Br ou I et Y l'hydrogène, Cl ou Br,

avec la condition que le point d'ébullition de ce solvant à la pression normale ne dépasse pas 190 °C s'il n'y a pas au moins un des radicaux X, X' et Y qui est l'hydrogène, et avec les autres conditions que si $R'_f$ est un groupe $-CFY-CF_2Y$ ou $-CF_2Y$ m soit nul, et que soient exclus les composés de formule

$X''CF_2-CY'Z-X'''$

dans laquelle

- X'' désigne les halogènes F, Cl, Br et I,
- X''' les halogènes Cl, Br et I et
- Y' et Z, indépendamment l'un de l'autre, l'hydrogène, F, Cl, Br, I et R',
- R' étant un perfluoralkyle ou un chlorofluoralkyle pouvant avoir de 1 à 6 atomes de carbone.

**2.** Solution selon la revendication 1, caractérisée en ce que dans la formule I X est l'hydrogène, le fluor, le chlore ou le brome.

**3.** Solution selon la revendication 1 et/ou 2, caractérisée en ce que dans la formule I n est un entier de 0 à 6 et m un entier de 0 à 3.

**4.** Solution selon l'une au moins des revendications 1 à 3, caractérisée en ce que R'f est un radical

$-CF_2-O-CFBr-CF_2Br$ ou 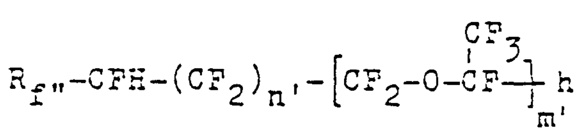 hat.

**5.** Solution selon l'une au moins des revendications 1 à 4, caractérisée en ce que le point d'ébullition du solvant ne dépasse pas 180 °C.

6. Solution selon l'une au moins des revendications 1 à 5, caractérisée en ce que sa teneur en matière solide du polymère fluoré est de 0,5 à 30% en poids.

7. Solution selon l'une au moins des revendications 1 à 6, caractérisée en ce que le polymère fluoré comprend au moins les motifs récurrents (C)

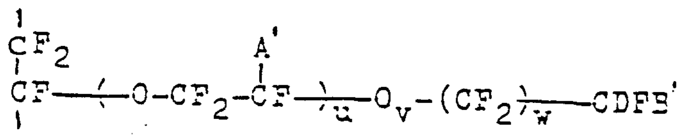 (C)

dans lesquels u = 0, 1 ou 2, v = 0 ou 1, w = 1 à 7, A' et B' sont chacun, indépendamment l'un de l'autre, le fluor ou le groupe $CF_3$ et D représente l'hydrogène, le chlore, le brome ou un groupe -COOR, R étant un alkyle en $C_1$-$C_{10}$.

8. Solution selon la revendication 7, caractérisée en ce que dans les motifs (C) u au moins = 0 et/ou v = 1, et en ce que la teneur du polymère en motifs (C) est de 10 à 50 mol%.

9. Solution selon l'une au moins des revendications 1 à 8, caractérisée en ce que le polymère fluoré comporte également des motifs (D)

$-CF_2-CFE-$ (D)

dans lesquels E représente Cl, F, $R_f$ ou un groupe $OR_f$, $R_f$ étant le radical $CF_3$ ou un perfluoralkyle en $C_2$-$C_8$ éventuellement interrompu par des atomes d'oxygène.

10. Solution selon une au moins des revendications 1 à 9, caractérisée en ce que le polymère fluoré comprend des groupes de formule (A) et/ou (B)

$-SO_2F$ (A)
-CG (B)

G désignant un groupe OOR et R un alkyle en $C_1$-$C_{10}$.

11. Emploi d'une solution selon une ou plusieurs des revendications précédentes en vue de former des membranes, en particulier pour fabriquer ou réparer des membranes destinées à des opérations où elles sont traversées par un liquide ou à des opérations d'échange d'ions.

12. Emploi selon la revendication 11, caractérisé en ce que l'opération de traversée du liquide est une électrolyse, en particulier une électrolyse d'une solution aqueuse de chlorure de sodium.

13. Emploi selon la revendication 11 ou 12 caractérisé en ce que l'opération de traversée par le liquide est une hyperfiltration ou ultrafiltration.

14. Emploi de la solution de la revendication 10 pour rendre mouillables des surfaces qui ne le sont pas.

15. Emploi d'une solution selon une ou plusieur des revendications 1 à 10 pour former des revêtements sur des matériaux de support inertes.